# DEMANDE DE BREVET EUROPEEN

(11) **EP 0 735 123 A1**
(43) Date de publication de la demande: **02.10.1996**
(21) Numéro de dépôt: 96420096.8
(22) Date de dépôt: 26.03.1996
(51) Int. Cl.: C09K 5/00, B01J 20/20

(54) **Procédé de fabrication de composites actifs à base de graphite expansé**

(30) Priorité: 28.03.1995 FR 9503979; 16.08.1995 FR 9509966
(71) Demandeur: LE CARBONE-LORRAINE, F-92400 Courbevoie (FR)
(72) Inventeur: Bou, Pierre, 95230 Soisy-sous-Montmorency (FR); Prades, Philippe, 66100 Perpignan (FR); Moreau, Michel, 92100 Clichy (FR)
(74) Mandataire: Mougeot, Jean-Claude

(57) **Abrégé**

Procédé de fabrication de composites actifs à base de graphite expansé, notamment pour les pompes à chaleur chimique ou pour les dispositifs de traitement des gaz, comprenant une étape de fabrication d'une poudre de graphite expansé, une étape de pré-densification de cette poudre, une étape d'imprégnation, de préférence à pression atmosphérique, avec une solution de sel réactif et d'un agent mouillant, une étape de séchage et une étape de densification complémentaire.

Le procédé selon l'invention permet de fabriquer de manière continue et rapidement un composite actif dont les performances sont nettement améliorées par rapport à l'art antérieur.

## Description

### Domaine de l'invention

La présente invention concerne un procédé de fabrication de composites actifs constitués d'un matériau support à base de graphite expansé et d'un agent actif vis-à-vis d'un gaz.

Ces composites sont en particulier utilisés comme milieux réactionnels dans les dispositifs exploitant des réactions entre un solide et un gaz, tels que les pompes à chaleur chimique et les dispositifs de traitement des gaz. Lesdits dispositifs sont désignés par l'expression "dispositifs de réactions solide-gaz" dans la suite du document.

Les réactions solide-gaz exploitées peuvent être de nature chimique, telle que la synthèse, ou physique, telle que l'adsorption.

### Etat de la technique

Les principes de base des dispositifs de réactions solide-gaz sont bien connus.

Par exemple, dans le domaine des pompes à chaleur chimique, qui est bien connu notamment par les documents EP-129 473 B1, FR-2 548 340 B1 et EP-206 875 B1, on exploite les réactions thermochimiques inversibles (ou renversables) entre un agent actif et un gaz réactif. Les réactions sont généralement exothermiques dans le sens de la synthèse et endothermiques dans le sens de la décomposition.

L'agent actif est généralement un sel réactif choisi parmi les chlorures, les bromures, les carbonates, les nitrates et les sulfates, tels que MnCl2, NiCl2, BaCl2, SrCl2, MgBr2, SrBr2, CaCO3,... Le gaz réactif est choisi parmi ceux qui réagissent de manière inversible avec le sel réactif, tels que l'eau, l'ammoniac (NH3), CO2, SO2, SO3,...

Les mêmes agents actifs peuvent être utilisés dans les dispositifs de traitement des gaz. On utilise également le gel de silice et les oxydes phosphoriques qui réagissent avec l'eau, le méthanol et ses dérivés.

Le graphite expansé, qui est poreux et bon conducteur thermique, permet d'obtenir des cinétiques de réaction et des coefficients d'échange thermique satisfaisants pour les applications industrielles. En effet, d'une part, la conductivité thermique des agents actifs est généralement très faible (<1 W/m.K) et, d'autre part, le gaz diffuse difficilement dans un lit d'agent actif compact.

Les procédés de fabrication du graphite expansé sont bien connus, en particulier par le brevet US-3 404 061. Ces procédés, dits d'exfoliation du graphite, comprennent une phase d'expansion rapide par chauffage d'un complexe graphitique qui produit une poudre de graphite expansé en vermicules.

Le composite actif peut consister en un simple mélange d'agent actif et de poudre de graphite expansé. Cependant, afin d'obtenir les caractéristiques mécaniques et thermiques nécessaires, notamment en vue de faciliter la manutention, le mélange d'agent réactif et de poudre de graphite expansé est le plus souvent aggloméré sous la forme d'un bloc. On charge ensuite le dispositif de réactions solide-gaz d'un ou plusieurs blocs de manière à former un milieu réactionnel sensiblement compact et en bon contact thermique avec les parois dudit dispositif.

Parmi les procédés connus de fabrication de composites actifs, on peut citer le procédé selon lequel on prépare un mélange à composition désirée d'agent actif et de graphite expansé de densité comprise entre 0,001 et 0,02, que l'on densifie ensuite par compression dans une matrice de manière à former des blocs à la densité souhaitée et de cohésion suffisante. Selon une variante de ce procédé, l'expansion du graphite est réalisée après avoir mélangé l'agent actif au complexe graphitique. Ce procédé est cependant difficilement applicable de manière industrielle, notamment pour des raisons de rendement.

Le brevet EP-477 343 décrit un procédé industriel bien connu qui facilite la manutention et favorise l'homogénéité du mélange. Selon ce procédé, on forme tout d'abord une poudre de graphite expansé par exfoliation, que l'on densifie ensuite par compression dans une matrice cylindrique de manière à former un bloc directement à la densité souhaitée, entre 0,02 et 1,5. Le bloc est enfin imprégné sous pression d'une solution liquide d'agent actif et séché de manière à évaporer le solvant.

Ce procédé présente néanmoins certains inconvénients importants. D'une part, la phase d'évaporation du solvant est très longue, à savoir plusieurs heures, voire jusqu'à 48 heures, ce qui augmente d'autant le temps de fabrication et requiert des manipulations supplémentaires. D'autre part, l'imprégnation sous pression exige des appareillages spécifiques et entraîne également des manipulations supplémentaires. Enfin, ce procédé se prête très difficilement à une fabrication en continu.

### Objet de l'invention

La présente invention a pour objet un procédé de fabrication de composites actifs à base de graphite expansé qui est rapide, qui se prête aisément à un mode de réalisation en continu, qui permet d'augmenter la productivité et qui conduit à la fabrication de produits ou de semi-produits s'adaptant à toute forme du dispositif de réactions solide-gaz.

### Description de l'invention

Le procédé de fabrication de composites actifs à base de graphite expansé selon l'invention est caractérisé en ce qu'il comprend les étapes de :
- fabrication de poudre de graphite expansé,
- pré-densification de la poudre de graphite expansé de manière à obtenir une préforme de densité et d'épaisseur intermédiaires déterminées,
- imprégnation d'une solution d'imprégnation comprenant un agent actif, un solvant et un agent mouillant,
- séchage de la préforme,
- densification complémentaire de la préforme, de manière à former un composite de base de densité et d'épaisseur finales déterminées.

L'étape de fabrication de la poudre de graphite expansé est réalisée selon tout procédé connu, de préférence en continu et/ou à partir de graphite naturel.

La pré-densification de la poudre de graphite expansé est réalisée par tout moyen connu, de préférence par compression dans une matrice, par roulage ou par laminage. Le laminage peut être effectué dans un laminoir horizontal, vertical ou incliné. Le roulage est le plus souvent réalisé à l'aide d'une plaque fixe et d'un ou plusieurs rouleaux en déplacement par rapport à cette plaque.

La densité intermédiaire est comprise entre 0,01 et 0,1, de préférence entre 0,02 et 0,07. L'épaisseur intermédiaire est comprise de préférence entre 1 et 30 mm lorsque la pré-densification est obtenue par roulage ou par laminage, et de préférence entre 30 et 1000 mm lorsque la pré-densification est obtenue par compression. La densité et l'épaisseur intermédiaires sont déterminées de manière à obtenir une préforme de tenue mécanique suffisante et de raideur acceptable pour déroulement satisfaisant des étapes suivantes du procédé, notamment pour les opérations de mise en forme. D'autre part, l'épaisseur intermédiaire est limitée de manière à assurer une imprégnation satisfaisante de la préforme.

L'imprégnation est effectuée par tout moyen connu, de préférence, soit par trempage de la préforme dans un bac contenant la solution d'imprégnation, soit par pulvérisation ou projection de ladite solution sur la préforme ou par aspiration ou transfert de ladite solution dans la préforme. L'imprégnation est réalisée de préférence à pression atmosphérique, mais peut également être réalisée en autoclave, éventuellement après avoir créé un vide primaire, et de préférence à une température inférieure à 100 °C de manière à réduire les coûts énergétiques. Le solvant est choisi parmi les solvants connus des agents actifs qui offrent un taux de solubilité suffisant pour atteindre la concentration d'agent actif visée dans le composite de base. Le solvant est de préférence un solvant polaire, tels que l'eau, l'acétone, l'ammoniaque, l'éther, la glycérine, les alcools,... De préférence encore, le solvant est non-polluant. L'agent mouillant est de préférence choisi parmi les mouillants du graphite connus, qui préservent la solubilité du solvant vis-à-vis de l'agent actif et qui permettent une imprégnation en profondeur et uniforme de la préforme, de préférence parmi les polyalcools, tels que le Triton X (R), Teepol (R) ou les éthylènes glycol, les polyfluorés, tels que Fluorad 95 (R), et les polysiloxanes. Pour un agent actif donné, la nature du solvant et de l'agent mouillant, de même que leurs proportions respectives, sont choisies de telle sorte que la concentration d'agent actif souhaitée dans le composite actif puisse être atteinte en une seule opération à la pression, à la température et pour le mode d'imprégnation fixés pour le procédé.

Le choix de l'agent actif est fonction du dispositif de réactions solide-gaz. Par exemple, pour les composites actifs destinés aux pompes à chaleur chimique, l'agent actif est généralement un sel réactif choisi parmi les chlorures, les bromures, les carbonates, les nitrates et les sulfates. Pour les composites actifs destinés aux dispositifs de traitement des gaz, l'agent actif est généralement choisi parmi le gel de silice, les oxydes phosphoriques et les sels réactifs, tels que les chlorures, les bromures, les carbonates, les nitrates et les sulfates.

Le séchage est effectué par tout moyen connu permettant une évaporation complète du solvant et de l'agent mouillant, de préférence dans un four, tel qu'un four à résistance, à induction, à micro-onde ou à infra-rouge, statique ou à défilement, ou dans une étuve à source UV, infra-rouge, HF ou micro-onde, statique ou à défilement.

La densification complémentaire de la préforme imprégnée et séchée est obtenue par tout moyen connu, de préférence par compression dans une matrice, par roulage ou par laminage. Le laminage peut être effectué dans un ou plusieurs laminoir(s) horizontal (horizontaux), vertical (verticaux) ou incliné(s). La densité finale de graphite est de préférence comprise entre 0,07 et 0,6. L'épaisseur finale est de préférence entre 0,5 et 20 mm lorsque la densification est effectuée par laminage ou par roulage, et de préférence entre 20 et 100 mm lorsque la densification est effectuée par compression. La densité et l'épaisseur finales sont choisies de manière à obtenir la concentration moyenne d'agent actif visée et à atteindre une diffusion du gaz et un rendement satisfaisants.

De manière à favoriser la diffusion du gaz réactif, c'est-à-dire de manière à augmenter la vitesse de diffusion du gaz entre l'extérieur et l'intérieur du composite actif, on peut éventuellement former un réseau de canaux de diffusion lors de l'étape de densification par tout moyen connu, tel que la gravure ou le moulage.

Selon une autre variante de l'invention, la préforme issue de l'étape de pré-densification subit une étape complémentaire de mise en forme initiale comprenant :
- une étape de pré-découpage par tout moyen connu, tel que le jet d'eau ou le laser ;
- et/ou une étape de perçage de trous de diffusion par tout moyen connu, tel que le perçage mécanique, le jet d'eau ou le laser ;
- et/ou une étape de perçage de trous d'assemblage par tout moyen connu ;
- et/ou une étape de formation de fentes et/ou d'entailles et/ou de rainures, traversantes ou non, par tout moyen connu, notamment par usinage.

Selon une autre variante de l'invention, le composite issu de l'étape d'imprégnation et/ou de l'étape de séchage subit une étape de mise en forme complémentaire comprenant :
- une étape de découpage par tout moyen connu, tel que le jet d'eau ou le laser ;
- et/ou une étape de perçage de trous de diffusion par tout moyen connu, tel que le perçage mécanique, le jet d'eau ou le laser ;
- et/ou une étape de perçage de trous d'assemblage par tout moyen connu ;
- et/ou une étape de formation de fentes, d'entailles et/ou de rainures, traversantes ou non, par tout moyen connu, notamment par usinage.

Selon une variante de l'invention, la densité finale du graphite et la concentration finale d'agent actif peuvent être obtenues en plusieurs opérations d'imprégnation, de séchage, de densification et, éventuellement, de mise en forme.

Selon une autre variante de l'invention, le composite de base issu de l'étape de densification complémentaire subit une étape de préparation de manière à obtenir un semi-produit particulier. Ladite étape de préparation comprend en particulier :
- une étape de perçage de trous de diffusion par tout moyen connu, tel que le perçage mécanique, le jet d'eau ou le laser;
- et/ou une étape de perçage de trous d'assemblage par tout moyen connu ;
- et/ou une étape de découpage par tout moyen connu, de manière à obtenir des composites actifs aux cotes souhaitées et/ou de formes spécifiques, telles que des disques, des rondelles, des parallélépipèdes rectangles, des losanges ou autres ;
- et/ou, de manière à améliorer davantage la diffusion du gaz, une étape de revêtement avec une couche de matériau très poreux, tel qu'un tissu, mat ou papier de matériau carboné, de verre ou tout autre matériau résistant au gaz et à la température de fonctionnement du dispositif de réactions solide-gaz. Il est avantageux de réaliser le revêtement en continu sur le composite de base à partir d'une bande continue dudit matériau ;
- et/ou une étape de formation de fentes et/ou d'entailles et/ou de rainures, traversantes ou non, par tout moyen connu, notamment par usinage.

Les fentes et/ou entailles et/ou rainures éventuellement formées lors des étapes de mise en forme et/ou de préparation peuvent être de différentes longueurs et de différentes formes, telles des arcs de cercle, et permettent d'ajouter des caractéristiques supplémentaires aux composites actifs selon l'invention. Lesdites fentes, entailles et rainures permettent notamment de varier la conductivité thermique dans le plan des composites de base de manière à ajuster l'écoulement thermique vers l'extérieur ou l'intérieur du composite actif.

Les composites issus de l'étape de densification complémentaire ou de l'étape éventuelle de préparation constituent des semi-produits qui permettent, en particulier, le chargement du dispositif de réactions solide-gaz à l'aide d'un ou plusieurs éléments de semi-produits.

Selon encore une autre variante de l'invention, le composite de base issu de l'étape de densification complémentaire, ou d'une éventuelle étape de préparation, subit une étape complémentaire d'assemblage permettant d'obtenir un produit fini facilitant le chargement dudit dispositif.

L'étape d'assemblage comprend de préférence, soit l'empilement de semi-produits, soit l'enroulement du semi-produit sur un mandrin.

Lorsque l'assemblage est réalisé par empilement, il est avantageux d'intercaler des éléments de matériau très poreux de manière à augmenter la diffusion du gaz. Il est également avantageux de consolider l'assemblage, soit par visserie avec rondelles et entre deux flasques, soit à l'aide de mèches de fibres de carbone ou de verre ou de matériau résistant au gaz et à la température de fonctionnement du dispositif de réactions solide-gaz, qui, tout en préservant la diffusion du gaz, traversent l'empilement perpendiculairement au plan des composites de base et qui consolident l'assemblage par tout moyen connu, tel que le laçage ou la couture.

Lorsque l'assemblage est réalisé par enroulement sur un mandrin, il est avantageux de consolider l'assemblage par sertissage.

Selon encore une autre variante de l'invention, le produit issu de l'étape d'assemblage subit une étape complémentaire de mise en forme finale comprenant :
- une étape de perçage de trous de diffusion par tout moyen connu, tel que le perçage mécanique, le jet d'eau ou le laser;
- et/ou une étape de découpage par tout moyen connu, de manière à obtenir des composites actifs aux cotes souhaitées et/ou de formes spécifiques, telles que des disques, des rondelles, des parallélépipèdes rectangles, des losanges ou autres.

Les trous de diffusion obtenus sur le produit ou sur le semi-produit permettent d'améliorer davantage le diffusion du gaz. De préférence, le diamètre final des trous de diffusion est compris entre 0,1 et 5 mm, et le nombre de trous de diffusion est compris entre 1 et 100 trous/cm2.

Il est avantageux de réaliser le procédé de l'invention en effectuant en continu l'étape de fabrication de la poudre de graphite expansé, en effectuant en continu l'étape de pré-densification, de préférence par laminage dans un premier laminoir, de manière à obtenir une préforme sous la forme d'une bande continue, en effectuant au passage sur ladite bande les étapes d'imprégnation, de séchage et de densification complémentaire, de préférence par laminage dans un deuxième laminoir, et, éventuellement, de mise en forme et/ou de préparation et/ou d'assemblage de manière à former un procédé continu. La bande de composite de base ainsi obtenue, et éventuellement percée et revêtue d'un matériau poreux, est ensuite soit découpée en éléments de composite actif, qui sont ensuite assemblés par empilement, soit assemblé par enroulement sur un mandrin de manière à former notamment un composite actif de forme cylindrique.

On peut également avantageusement réaliser le procédé de fabrication de l'invention en effectuant en continu la fabrication de la poudre de graphite expansé et la pré-densification, de préférence par laminage, en découpant la préforme en éléments, et en effectuant au défilé les étapes d'imprégnation, de séchage, de densification complémentaire et, éventuellement, de mise en forme et/ou de préparation. L'étape d'imprégnation peut éventuellement être effectuée par lots de un ou plusieurs éléments de préforme.

Les chutes de découpage peuvent être broyées et recyclées en amont de l'étape de pré-densification.

On peut aussi avantageusement réaliser le procédé de l'invention en effectuant la fabrication de la poudre de graphite expansé en continu, la pré-densification et la densification par compression, et les étapes d'imprégnation et de séchage et, éventuellement, de mise en forme et/ou de préparation au défilé.

Les composites actifs fabriqués par le procédé de l'invention sont avantageusement utilisés pour les pompes à chaleur chimique et les dispositifs de traitement des gaz.

Comme le montre l'exemple ci-dessous, le procédé de fabrication selon l'invention améliore considérablement les performances techniques des composites actifs, notamment la conductivité thermique, le coefficient de contact à la paroi du réacteur et la cinétique des réactions.

Le procédé selon l'invention présente aussi l'avantage très important de réduire le temps de fabrication par un facteur cent environ. En effet, le temps de fabrication passe typiquement de 100 heures à 1 heure.

Un autre avantage très important du procédé selon l'invention est la possibilité de réaliser plusieurs étapes en continu, dans une chaîne de montage simplifiée et automatisée qui inclut en particulier la production et le défilement d'une bande continue.

Un autre avantage du procédé selon l'invention est la grande souplesse de fabrication de composites actifs de formes variées.

Le procédé selon l'invention réduit considérablement la quantité de chutes d'usinage et d'écroutage qui grèvent les coûts de fabrication de manière significative.

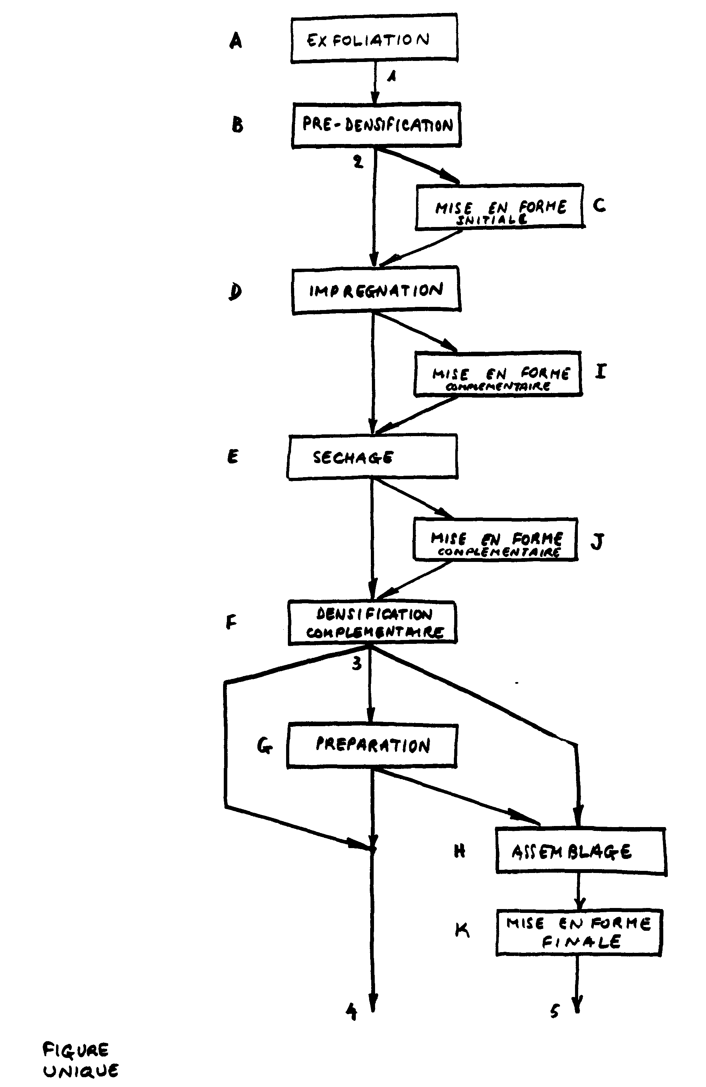

L'invention sera mieux comprise à l'aide de la figure et de l'exemple ci-dessous, qui sont donnés à titre nullement limitatif.

### Description de la figure unique

La figure unique schématise le procédé de fabrication selon l'invention. Le procédé comprend une étape (A) de fabrication d'une poudre de graphite expansé par exfoliation selon tout procédé connu. La poudre de graphite expansé (1) issue de l'étape (A) subit ensuite une étape de pré-densification (B), une étape d'imprégnation (D), une étape de séchage (E), puis une étape de densification complémentaire (F).

La préforme (2) issue de l'étape de pré-densification (B) peut éventuellement subir une étape de mise en forme initiale (C) avant l'étape d'imprégnation.

La préforme imprégnée issue de l'étape d'imprégnation (D) et/ou de l'étape de séchage (E) peut éventuellement subir une étape de mise en forme complémentaire (I et/ou J).

Le composite de base (3) issu de l'étape (F), éventuellement après avoir subi une étape de préparation (G), peut être utilisé comme semi-produit (4), lequel peut être utilisé dans l'assemblage (H) d'un produit fini (5). Le produit issu de l'étape d'assemblage peut éventuellement subir une étape de mise en forme finale (K).

### Exemple 1

Un bloc de composite actif pour pompe à chaleur chimique, noté R1, a été fabriqué selon l'art antérieur. Pour cela, une poudre de graphite naturel expansé a été obtenue selon le procédé décrit dans le brevet US-3 404 061. Cette poudre a ensuite été comprimée dans un moule jusqu'à une densité égale à 0,2, puis imprégnée d'une solution aqueuse de MnCl2. L'imprégnation a été effectuée dans un autoclave sous une pression de 6 bar après avoir créé un vide primaire. Le taux de sel dans le bloc composite était de 55 % en poids. Le bloc de composite actif ainsi obtenu a finalement été séché à 220 °C pendant 48 heures. Le bloc était de forme cylindrique, d'une hauteur de 100 mm et d'un diamètre de 150 mm.

Un second composite actif pour pompe à chaleur chimique, noté R2, a été fabriqué selon le procédé de l'invention. Pour cela, une poudre de graphite naturel expansé a été préparée selon un procédé comparable à celui utilisé pour fabriquer le bloc de composite actif selon l'art antérieur. Cette poudre de graphite naturel expansé a ensuite subi une pré-densification jusqu'à une densité de 0,03 et une épaisseur de 10 mm, dans un premier laminoir, puis une étape d'imprégnation par pulvérisation en continu d'une solution aqueuse de MnCl2 contenant du Teepol (R) comme agent mouillant, puis une étape de séchage dans un four à défilement à 220 °C pendant environ 30 minutes, puis une étape de densification finale jusqu'à une densité de graphite dans le composite de 0,2 et une épaisseur de 1,5 mm dans un deuxième laminoir. La bande ainsi obtenue a ensuite été revêtue d'un mat de carbone, puis découpée en disques de 150 mm de diamètre percés en leur centre d'un trou de 5 mm de diamètre, formant ainsi des éléments de composite de base. Un composite actif a enfin été obtenu par empilement de 67 éléments. La nature et le taux du sel réactif étaient les mêmes que pour le bloc de composite actif selon l'art antérieur.

Les deux produits ont été mis à l'essai dans le même réacteur et dans les mêmes conditions. Un série de 20 cycles de synthèse et décomposition a été réalisée avec un avancement des réactions de synthèse de 80 %. Les conductivités en début de synthèse (S) et en début de décomposition (S'), les coefficients de contact à la paroi du réacteur en début de synthèse (C) et en début de décomposition (C') et les temps de synthèse à 80 % (T) et de décomposition complète (T') ont été mesurés.

Le tableau 1 ci-dessous regroupe les résultats obtenus, qui montrent que le composite actif selon l'invention présente des performances nettement supérieures à celles du composite actif de l'art antérieur.

**TABLEAU 1**

| | R1 | R2 |
|---|---|---|
| | Art antérieur | Invention |
| S (W/m.K) | 18 | 25 |
| S' (W/m.K) | 17 | 18 |
| C (W/m2.K) | 70 | 480 |
| C' (W/m2.K) | 1800 | 3800 |
| T (min) | 20 | 12 |
| T' (min) | 80 | 24 |

## Revendications

1. Procédé de fabrication de composites actifs à base de graphite expansé caractérisé en ce qu'il comprend les étapes de :
- fabrication de poudre de graphite expansé,
- pré-densification de la poudre de graphite expansé de manière à obtenir une préforme de densité et d'épaisseur intermédiaires déterminées,
- imprégnation d'une solution d'imprégnation comprenant un agent actif, un solvant et un agent mouillant,
- séchage de la préforme,
- densification complémentaire de la préforme, de manière à former un composite de base de densité et d'épaisseur finales déterminées.

2. Procédé selon la revendication 1, caractérisé en ce que le graphite expansé est obtenu à partir de graphite naturel.

3. Procédé selon l'une des revendications 1 et 2, caractérisé en ce que la poudre de graphite expansé est fabriquée en continu.

4. Procédé selon l'une des revendications 1 à 3, caractérisé en ce que le moyen de pré-densification est choisi parmi la compression dans une matrice, le roulage et le laminage.

5. Procédé selon l'une des revendications 1 à 4, caractérisé en ce que la densité intermédiaire est comprise entre 0,01 et 0,1 et en ce que l'épaisseur intermédiaire est comprise entre 1 et 30 mm lorsque la pré-densification est obtenue par roulage ou par laminage et entre 30 et 1000 mm lorsque la pré-densification est obtenue par compression.

6. Procédé selon l'une des revendications 1 à 4, caractérisé en ce que la densité intermédiaire est comprise entre 0,02 et 0,07 et en ce que l'épaisseur intermédiaire est comprise entre 1 et 30 mm lorsque la pré-densification est obtenue par roulage ou par laminage et entre 30 et 1000 mm lorsque la pré-densification est obtenue par compression.

7. Procédé selon l'une des revendications 1 à 6, caractérisé en ce que l'imprégnation est effectuée par trempage dans un bac contenant ladite solution.

8. Procédé selon l'une des revendications 1 à 6, caractérisé en ce que l'imprégnation est effectuée par projection ou pulvérisation ou aspiration ou transfert de ladite solution.

9. Procédé selon l'une des revendications 1 à 8, caractérisé en ce que l'imprégnation est effectuée à pression atmosphérique.

10. Procédé selon l'une des revendications 1 à 9, caractérisé en ce que ledit solvant est choisi parmi les solvants polaires de l'agent actif qui offrent un taux de solubilité qui permette d'atteindre la concentration d'agent actif visée dans le composite actif.

11. Procédé selon l'une des revendications 1 à 10, caractérisé en ce que l'agent mouillant est choisi parmi les agents mouillants du graphite connus qui préservent le taux de solubilité du solvant et qui permettent une imprégnation en profondeur et uniforme de la préforme à la température, à la pression et pour le mode d'imprégnation fixées pour ledit procédé.

12. Procédé selon l'une des revendications 1 à 11, caractérisé en ce que l'agent mouillant est choisi parmi les polyalcools, les polyfluorés et les polysiloxanes.

13. Procédé selon l'une des revendications 1 à 12, caractérisé en ce que le moyen de séchage est choisi parmi les fours ou étuves, statiques ou à défilement.

14. Procédé selon l'une des revendications 1 à 13, caractérisé en ce que le moyen de densification complémentaire est choisi parmi la compression dans une matrice, le roulage et le laminage.

15. Procédé selon l'une des revendications 1 à 14, caractérisé en ce que la densité finale de graphite est comprise entre 0,07 et 0,6 et en ce que l'épaisseur finale est comprise entre 0,5 et 20 mm lorsque la densification est effectuée par laminage ou par roulage, et entre 20 et 100 mm lorsque la densification est effectuée par compression.

16. Procédé selon l'une des revendications 1 à 15, caractérisé en ce que l'étape de densification complémentaire comprend la formation d'un réseau de canaux de diffusion par tout moyen connu.

17. Procédé selon l'une des revendications 1 à 16, caractérisé en ce que la préforme issue de l'étape de pré-densification subit une étape complémentaire de mise en forme initiale comprenant
- une étape de pré-découpage par tout moyen connu,
- et/ou une étape de perçage de trous de diffusion, par tout moyen connu,
- et/ou une étape de perçage de trous d'assemblage par tout moyen connu ;
- et/ou une étape de formation, par tout moyen connu, de fentes et/ou d'entailles et/ou de rainures, traversantes ou non, de différentes longueurs et de différentes formes.

18. Procédé selon l'une des revendications 1 à 17, caractérisé en ce que la préforme imprégnée issue de l'étape d'imprégnation et/ou de l'étape de séchage subit une étape de mise en forme complémentaire comprenant
- une étape de découpage par tout moyen connu,
- et/ou une étape de perçage de trous de diffusion par tout moyen connu,
- et/ou une étape de perçage de trous d'assemblage par tout moyen connu ;
- et/ou une étape de formation, par tout moyen connu, de fentes et/ou d'entailles et/ou de rainures, traversantes ou non, de différentes longueurs et de différentes formes.

19. Procédé selon l'une des revendications 1 à 18, caractérisé en ce que l'on effectue plusieurs étapes d'imprégnation, de séchage et de densification et, éventuellement, de mise en forme.

20. Procédé selon l'une des revendications 1 à 19, caractérisé en ce que, de manière à obtenir un semi-produit, le composite de base issu de l'étape de densification complémentaire subit une étape complémentaire de préparation comprenant
- une étape de perçage de trous de diffusion, par tout moyen connu,
- et/ou une étape de perçage de trous d'assemblage par tout moyen connu,
- et/ou une étape de découpage par tout moyen connu, de manière à obtenir des semi-produits aux cotes souhaitées et/ou de formes spécifiques,
- et/ou une étape de revêtement avec une couche de matériau très poreux, tel qu'un tissu, mat ou papier de matériau carboné, de verre ou tout autre matériau résistant au gaz et à la température de fonctionnement du dispositif de réactions solide-gaz,
- et/ou une étape de formation, par tout moyen connu, de fentes et/ou d'entailles et/ou de rainures, traversantes ou non, de différentes longueurs et de différentes formes.

21. Procédé selon l'une des revendications 1 à 20, caractérisé en ce que, de manière à produire un produit fini, les semi-produits issus de l'étape de densification ou de l'étape complémentaire de préparation subissent une étape complémentaire d'assemblage qui comprend un empilement de semi-produits et, éventuellement, d'éléments de matériau très poreux.

22. Procédé selon la revendication 21, caractérisé en ce que l'empilement est consolidé, soit par visserie avec rondelles et entre deux flasques, soit par laçage ou couture à l'aide de mèches de fibres de carbone ou de verre ou de matériau résistant au gaz et à la température de fonctionnement du dipositif de réactions solide-gaz.

23. Procédé selon la revendication 20, caractérisé en ce que le semi-produit issu de l'étape de densification ou de l'étape complémentaire de préparation subit une étape d'assemblage qui comprend un enroulement du semi-produit sur un mandrin et, éventuellement, un sertissage.

24. Procédé selon l'une des revendications 1 à 23, caractérisé en ce que le produit issu de l'étape d'assemblage subit une étape complémentaire de mise en forme finale comprenant
- une étape de perçage de trous de diffusion par tout moyen connu,
- et/ou une étape de découpage par tout moyen connu, de manière à obtenir des composites actifs aux cotes souhaitées et/ou de formes spécifiques.

25. Procédé selon l'une des revendications 1 à 24, caractérisé en ce que le diamètre final des trous de diffusion sur le produit ou le semi-produit est compris entre 0,1 et 5 mm et en ce que le nombre desdits trous est compris entre 1 et 100 trous/cm2.

26. Procédé selon l'une des revendications 1 à 25, caractérisé en ce que les étapes de fabrication de la poudre de graphite expansé, de pré-densification, d'imprégnation, de séchage, de densification complémentaire et, éventuellement, de mise en forme et/ou de préparation et/ou d'assemblage forment un procédé continu.

27. Procédé selon la revendication 26, caractérisé en ce que la pré-densification et la densification complémentaire sont réalisées par laminage.

28. Procédé selon l'une des revendications 1 à 25, caractérisé en ce que les étapes de fabrication de la poudre de graphite expansé et de pré-densification sont réalisées en continu, et en ce que les étapes d'imprégnation, de séchage, de densification complémentaire et, éventuellement, de mise en forme et/ou de préparation sont réalisées au défilé.

29. Procédé selon la revendication 28, caractérisé en ce que la pré-densification est réalisée par laminage.

30. Procédé selon l'une des revendications 17 et 29, caractérisé en ce que les chutes de découpage sont broyées et recyclées en amont de l'étape de pré-densification.

31. Procédé selon l'une des revendications 1 à 25, caractérisé en ce que les étapes de fabrication de la poudre de graphite expansé est réalisée en continu, en ce que la pré-densification et la densification complémentaire sont obtenues par compression, et ce que les étapes d'imprégnation, de séchage et, éventuellement, de mise en forme et/ou de préparation sont réalisées au défilé.
